# EUROPEAN PATENT SPECIFICATION

(11) **EP 3 106 493 B1**
(45) Date of publication and mention of the grant of the patent: **03.04.2024**
(21) Application number: 15749589.6
(22) Date of filing: 13.02.2015
(51) Int. Cl.: C08L 69/00, C08K 5/521, C08L 35/06, C08L 51/04, C08L 55/02, C08K 5/523, C08G 77/448, C08L 83/10

(54) **POLYCARBONATE RESIN COMPOSITION**
POLYCARBONATHARZZUSAMMENSETZUNG
COMPOSITION DE RÉSINE DE POLYCARBONATE

(30) Priority: 13.02.2014 JP 2014025711
(43) Date of publication of application: 21.12.2016
(73) Proprietor: Idemitsu Kosan Co., Ltd, Tokyo 100-8321 (JP)
(72) Inventor: MURAKAMI, Tsuyoshi, Ichihara-shi Chiba 299-0193 (JP); OKAMOTO, Yoshio, Ichihara-shi Chiba 299-0193 (JP)
(74) Representative: Hoffmann Eitle
(86) International application number: PCT/JP2015/053978
(87) International publication number: WO 2015/122493

(56) References cited:
- EP-A1- 2 787 041
- EP-A1- 3 127 964
- WO-A1-2009/017938
- WO-A1-2009/017938
- WO-A1-2010/077644
- WO-A1-2013/081161
- WO-A1-2013/081161
- US-A1- 2008 194 755

## Description

### TECHNICAL FIELD

The present invention relates to a polycarbonate resin composition.

### BACKGROUND ART

A polycarbonate-polyorganosiloxane copolymer (hereinafter sometimes referred to as "PC-POS") has been attracting attention because of its excellent properties such as high impact resistance, chemical resistance, and flame retardancy. Accordingly, a polycarbonate resin composition containing the PC-POS has been expected to be widely utilized in various fields such as the field of electrical and electronic equipment, and the field of automobiles . In particular, the utilization of the polycarbonate resin composition containing the PC-POS in housings for a cellular phone, a mobile personal computer, a digital camera, a video camera, an electric tool, and the like, and in other commodities has been expanding.

In the polycarbonate resin composition containing the PC-POS, investigations have been made on further improvements in impact resistance and flame retardancy thereof, and the impartment of any other characteristic, such as flowability, thereto. For example, in each of Patent Documents 1 and 2, there is a disclosure of a thermoplastic resin composition that contains a predetermined amount of each of a polycarbonate resin, an acrylonitrile-styrene copolymer (hereinafter sometimes referred to as "AS") or an acrylonitrile-butadiene-styrene copolymer (hereinafter sometimes referred to as "ABS"), a polysiloxane-polycarbonate copolymer, and a phosphorus-containing flame retardant, and that is improved in flowability and flame retardancy substantially without the deterioration of its impact strength.

In each of Patent Documents 3 and 4, as a polycarbonate resin composition that satisfies moldability, impact resistance, and rigidity while maintaining excellent flame retardancy, and that can be molded into a molded body excellent in thermal stability, there is a disclosure of a polycarbonate resin composition containing, for example, a polycarbonate resin, a styrene-based resin, and a polycarbonate-polyorganosiloxane copolymer and/or a functional group-containing silicone compound.

In addition, in Patent Document 5, there is a disclosure of a polycarbonate resin composition that contains a polycarbonate and/or a copolyester carbonate having an aliphatic segment, an ABS-based resin and/or an acrylonitrile-styrene (SAN) resin, a phosphate-based compound, and a polysiloxane-polycarbonate block copolymer, and that has excellent flame retardancy even when molded into a thin shape. Patent Document 6 discloses a thermoplastic resin composition comprising a polycarbonate-polyorganosiloxane copolymer resin, a flame retardant, a silicate mineral and a dripping inhibitor. Patent Documents 7 and 8 disclose a thermoplastic resin composition comprising a polycarbonate, a polycarbonate-polysiloxane copolymer, impact modifiers and an aromatic vinyl copolymer. Patent Document 9 discloses a thermoplastic polycarbonate composition comprising a reinforcing mineral filler and an polymer component including an aromatic polycarbonate and a fluorinated polymer.

### CITATION LIST

### PATENT DOCUMENT

[Patent Document 1] JP 2006-52401 A
[Patent Document 2] JP 2008-516013 A
[Patent Document 3] JP 2000-191898 A
[Patent Document 4] JP 2001-55500 A
[Patent Document 5] JP 04-285655 A
[Patent Document 6] WO 2013/081161 A1
[Patent Document 7] WO 2009/017938 A1
[Patent Document 8] US 2008/194755 A1
[Patent Document 9] WO 2010/077644 A1

### SUMMARY OF THE INVENTION

### TECHNICAL PROBLEM

A polycarbonate resin composition that can be molded into a thin-walled and large-sized molded body is required to have high flowability comparable to that of an ABS resin. However, when an attempt is made to improve the flowability of a polycarbonate resin composition containing a PC-POS, its impact strength tends to reduce, and hence it has heretofore been difficult to achieve both the flowability and the impact strength at high levels.

Further, the addition of the ABS resin, an AS resin, or the like to the polycarbonate resin composition for improvements in flowability and impact resistance thereof involves a problem in that its flame retardancy reduces.

An object of the present invention is to provide a polycarbonate resin composition that is excellent in flowability and flame retardancy, and can provide a molded body having a high impact strength.

### SOLUTION TO PROBLEM

The inventors of the present invention have made extensive investigations, and as a result, have found that in a polycarbonate resin composition containing a PC-POS and a specific copolymer, the problems can be solved by setting each of the content of a POS block moiety in the resin composition and the content of a copolymerized component in the copolymer within a specific range. Thus, the inventors have completed the present invention.

That is, the present invention relates to the following items [1] to [13] .

[1] A polycarbonate resin composition, comprising:
   a polycarbonate resin (A) containing a polycarbonate-polyorganosiloxane copolymer (A-1) having a polycarbonate block comprising a repeating unit represented by the general formula (I) and a polyorganosiloxane block comprising a repeating unit represented by the general formula (II);
   a copolymer (B) having constituent units derived from acrylonitrile and styrene, and being free of a constituent unit derived from methyl methacrylate;
   a copolymer (C) having constituent units derived from butadiene and methyl methacrylate; and a flame retardant (D),
   in which a content of the polyorganosiloxane block moiety in the entire resin composition is from 0.70 mass% to 10 mass%, and a content of the constituent unit derived from butadiene in the entire resin composition is from 3 mass% to 10 mass%: 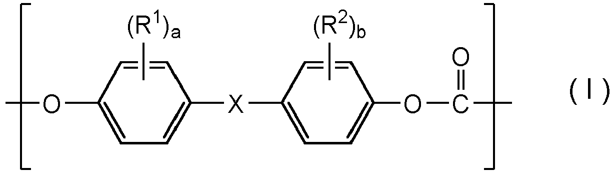 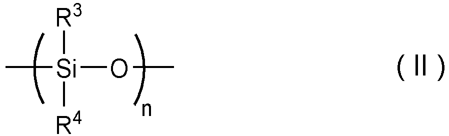
   wherein R¹ and R² each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, -SO₂-, -O-, or -CO-, R³ and R⁴ each independently represent a hydrogen atom, a halogen atom, an alkyl group having 1 to 6 carbon atoms, an alkoxy group having 1 to 6 carbon atoms, or an aryl group having 6 to 12 carbon atoms, a and b each independently represent an integer of from 0 to 4, and n represents an average number of repetitions, wherein the component (B) contains an acrylonitrile-butadiene-styrene terpolymer (B-1).
[2] The polycarbonate resin composition according to Item [1], wherein a content of the polyorganosiloxane block moiety in the polycarbonate resin (A) is from 0.75 mass% to 15 mass%.
[3] The polycarbonate resin composition according to Item [1], wherein the component (B) further contains an acrylonitrile-styrene bipolymer (B-2).
[4] The polycarbonate resin composition according to any one of Items [1] to [3], wherein the component (C) contains one or more selected from a methyl methacrylate-butadiene-styrene terpolymer and a methyl methacrylate-butadiene bipolymer.
[5] The polycarbonate resin composition according to Item [3] or [4], wherein a content of the component (B-1) is from 8 parts by mass to 100 parts by mass, a content of the component (B-2) is 25 parts by mass or less, and a content of the component (C) is from 0.5 part by mass to 8 parts by mass with respect to 100 parts by mass of the component (A).
[6] The polycarbonate resin composition according to any one of Items [1] to [5], wherein a content of the constituent unit derived from butadiene in the component (B-1) is from 8 mass% to 75 mass%.
[7] The polycarbonate resin composition according to any one of Items [3] to [6], wherein a melt volume rate (MVR) of the component (B-2) measured at a temperature of 200°C and a load of 10 kgf is from 3 cm³/10 min to 150 cm³/10 min.
[8] The polycarbonate resin composition according to Items [1] to [7], wherein the component (D) comprises a phosphorus-based flame retardant.
[9] The polycarbonate resin composition according to Item [8], wherein the phosphorus-based flame retardant comprises a condensed phosphate.
[10] The polycarbonate resin composition according to any one of Items [1] to [9], wherein a content of the retardant (D) is from 10 parts by mass to 40 parts by mass with respect to 100 parts by mass of the component (A).
[11] A molded body, comprising the polycarbonate resin composition of any one of Items [1] to [10].

### ADVANTAGEOUS EFFECTS OF INVENTION

According to the present invention, it is possible to provide the polycarbonate resin composition that is excellent in flowability and flame retardancy, and can provide a molded body having a high impact strength.

### DESCRIPTION OF EMBODIMENTS

### [Polycarbonate Resin Composition]

A polycarbonate resin composition of the present invention comprises: a polycarbonate resin (A) containing a polycarbonate-polyorganosiloxane copolymer (A-1) having a polycarbonate block comprising a repeating unit represented by the general formula (I) and a polyorganosiloxane block comprising a repeating unit represented by the general formula (II); a copolymer (B) having constituent units derived from acrylonitrile and styrene, and being free of a constituent unit derived from methyl methacrylate; a copolymer (C) having constituent units derived from butadiene and methyl methacrylate; and a flame retardant (D), in which a content of the polyorganosiloxane block moiety in the entire resin composition is from 0.70 mass% to 10 mass%, and a content of the constituent unit derived from butadiene in the entire resin composition is from 3 mass% to 10 mass%: 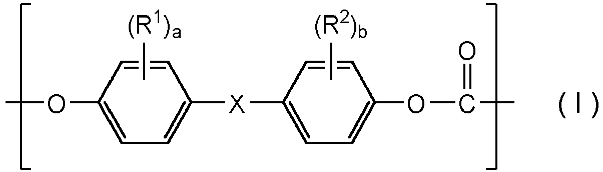 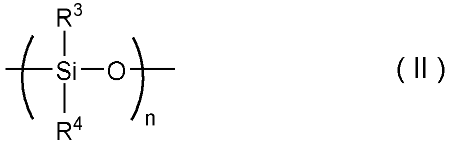 wherein R¹ and R² each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, -SO₂-, -O-, or -CO-, R³ and R⁴ each independently represent a hydrogen atom, a halogen atom, an alkyl group having 1 to 6 carbon atoms, an alkoxy group having 1 to 6 carbon atoms, or an aryl group having 6 to 12 carbon atoms, a and b each independently represent an integer of from 0 to 4, and n represents an average number of repetitions, wherein the component (B) contains an acrylonitrile-butadiene-styrene terpolymer (B-1).

### [Polycarbonate Resin (A)]

The polycarbonate resin (A) (hereinafter sometimes referred to as "component (A) ") to be used in the present invention contains the polycarbonate-polyorganosiloxane copolymer (A-1) (hereinafter sometimes referred to as "PC-POS (A-1)" or "component (A-1)"). As described later, an aromatic polycarbonate resin (A-2) except the component (A-1) may be incorporated as the component (A) to the extent that the effects of the present invention are not impaired.

### <Polycarbonate-polyorganosiloxane Copolymer (A-1)>

The PC-POS (A-1) is a polycarbonate-polyorganosiloxane copolymer having a polycarbonate block formed of a repeating unit represented by the general formula (I) and a polyorganosiloxane block containing a repeating unit represented by the general formula (II) . 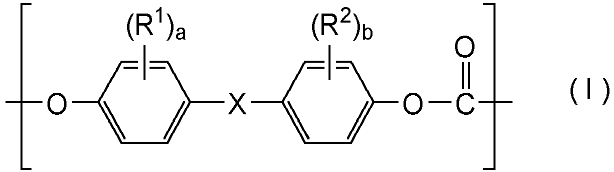 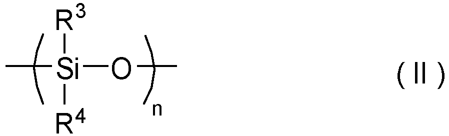 wherein R¹ and R² each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, -SO₂-, -O-, or -CO-, R³ and R⁴ each independently represent a hydrogen atom, a halogen atom, an alkyl group having 1 to 6 carbon atoms, an alkoxy group having 1 to 6 carbon atoms, or an aryl group having 6 to 12 carbon atoms, a and b each independently represent an integer of from 0 to 4, and n represents an average number of repetitions.]

One of the PC-POS (A-1) may be used alone, or two or more thereof may be used in combination. In addition, the number of kinds of the repeating units each represented by the general formula (I) in the PC-POS (A-1) may be only one, or may be two or more. The same holds true for the repeating unit represented by the general formula (II) in the PC-POS (A-1).

Examples of the halogen atom that R¹ and R² in the general formula (I) each independently represent include a fluorine atom, a chlorine atom, a bromine atom, and an iodine atom.

Examples of the alkyl group that R¹ and R² each independently represent include a methyl group, an ethyl group, a n-propyl group, an isopropyl group, various butyl groups ("various" means that a linear group and any branched group are included, and the same shall apply hereinafter), various pentyl groups, and various hexyl groups. An example of the alkoxy group that R¹ and R² each independently represent is an alkoxy group whose alkyl group moiety is the alkyl group described above.

R¹ and R² each preferably represent an alkyl group having 1 to 4 carbon atoms or an alkoxy group having 1 to 4 carbon atoms.

Examples of the alkylene group represented by X include a methylene group, an ethylene group, a trimethylene group, a tetramethylene group, and a hexamethylene group, and an alkylene group having 1 to 5 carbon atoms is preferred. Examples of the alkylidene group represented by X include an ethylidene group and an isopropylidene group. The cycloalkylene group represented by X is preferably a cycloalkylene group having 5 to 10 carbon atoms, and examples thereof include a cyclopentanediyl group, a cyclohexanediyl group, and a cyclooctanediyl group. Examples of the cycloalkylidene group represented by X include a cyclohexylidene group, a 3,5,5-trimethylcyclohexylidene group, and a 2-adamantylidene group, a cycloalkylidene group having 5 to 10 carbon atoms is preferred, and a cycloalkylidene group having 5 to 8 carbon atoms is more preferred. As an aryl moiety of the arylalkylene group represented by X, there are given, for example, aryl groups each having 6 to 14 ring-forming carbon atoms, such as a phenyl group, a naphthyl group, a biphenyl group, and an anthryl group. As an aryl moiety of the arylalkylidene group represented by X, there are given, for example, aryl groups each having 6 to 14 ring-forming carbon atoms, such as a phenyl group, a naphthyl group, a biphenyl group, and an anthryl group.
a and b each independently represent an integer of from 0 to 4, preferably from 0 to 2, more preferably 0 or 1.

Examples of the halogen atom that R³ and R⁴ in the general formula (II) each independently represent include a fluorine atom, a chlorine atom, a bromine atom, and an iodine atom. Examples of the alkyl group or alkoxy group that R³ and R⁴ each independently represent include the same examples as those in the case of R¹ and R². Examples of the aryl group that R³ and R⁴ each independently represent include a phenyl group and a naphthyl group.

R³ and R⁴ each preferably represent a hydrogen atom, an alkyl group having 1 to 6 carbon atoms, an alkoxy group having 1 to 6 carbon atoms, or an aryl group having 6 to 12 carbon atoms, and each more preferably represent a methyl group.

In the general formula (II), n represents an average number of repetitions, and represents an integer of preferably from 30 to 500, more preferably from 30 to 150, still more preferably from 30 to 120. When the average number n of repetitions is 30 or more, the impact resistance of the resin composition is sufficient. When the average number n of repetitions is 500 or less, the following situation is easily avoided: handling at the time of the production of the copolymer becomes difficult owing to an excessive increase in viscosity of the raw material POS.

The structure of the polyorganosiloxane block containing a repeating structure represented by the general formula (II) is preferably a structure represented by the general formula (II').

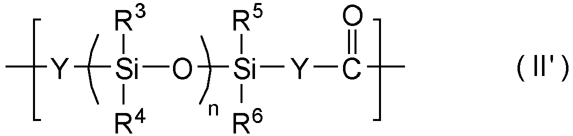

In the formula (II'), R³ to R⁶ each independently represent a hydrogen atom, a halogen atom, an alkyl group having 1 to 6 carbon atoms, an alkoxy group having 1 to 6 carbon atoms, or an aryl group having 6 to 12 carbon atoms, Y represents a single bond, or a divalent organic residue containing -C(=O)-, an aliphatic group, or an aromatic group, and n represents an average number of repetitions.

R³ to R⁶ each preferably represent a hydrogen atom, an alkyl group having 1 to 6 carbon atoms, an alkoxy group having 1 to 6 carbon atoms, or an aryl group having 6 to 12 carbon atoms. Y preferably represents a residue of a phenol-based compound having an alkyl group, and more preferably represents an organic residue derived from allylphenol or an organic residue derived from eugenol.

In addition, it is also preferred that the structure of the polyorganosiloxane block containing a repeating structure represented by the general formula (II) be a structure represented by the following formula (II").

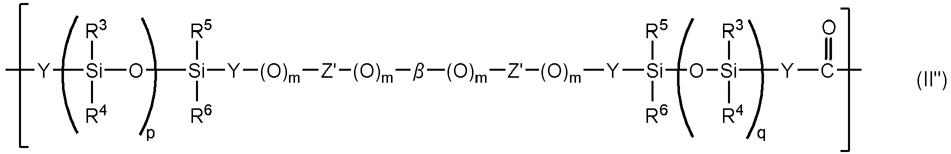

In the formula (II"), R³ to R⁶ and Y are identical to those in the general formula (II'), and preferred examples thereof are also the same as those in the formula. The sum of p and q equals n. Each of p and q preferably equals n/2.
m represents 0 or 1.
Z' represents a single bond, -R⁷O-, -R⁷COO-, -R⁷NH-, -COO-, or -S-, and the R⁷ represents a linear, branched, or cyclic alkylene group, an aryl-substituted alkylene group that may have an alkoxy group on an aromatic ring thereof, an arylene group, or a diarylene group. Specific examples of the R⁷ are described later.

In addition, β represents a divalent group derived from a diisocyanate compound, a divalent group derived from a dicarboxylic acid, or a divalent group derived from a dicarboxylic acid halide. Specific examples of the divalent group derived from a diisocyanate compound, the divalent group derived from a dicarboxylic acid, and the divalent group derived from a dicarboxylic acid halide are described later.

The content of the polyorganosiloxane block moiety containing the repeating unit represented by the general formula (II) in the PC-POS (A-1) is preferably from 2.0 mass% to 15 mass%, more preferably from 3.0 mass% to 8.5 mass%, still more preferably from 3.2 mass% to 7.5 mass%. When the content is 2.0 mass% or more, the impact resistance of the resin composition to be obtained becomes more satisfactory. In addition, when the content is 15 mass% or less, handleability at the time of the production of the PC-POS (A-1) becomes easier. The content of the polyorganosiloxane block moiety in the component (A-1) can be calculated by nuclear magnetic resonance (NMR).

The viscosity-average molecular weight (Mv) of the PC-POS (A-1) is preferably from 10,000 to 25,000, more preferably from 12,000 to 23,000. When the viscosity-average molecular weight of the component (A-1) falls within the range, it is easy to balance the flowability with impact resistance of the resin composition.

In the present invention, the viscosity-average molecular weight (Mv) is a value calculated from Schnell's equation ([η] = 1.23×10⁻⁵×Mv^{0.83}) by measuring the limiting viscosity [η] of a methylene chloride solution at 20°C with an Ubbelohde-type viscosity tube.

A method of producing the PC-POS (A-1) is not particularly limited, and the PC-POS can be easily produced with reference to a known production method for a PC-POS, e.g., a method described in JP 2010-241943 A.

Specifically, the PC-POS can be produced by: dissolving an aromatic polycarbonate oligomer produced in advance and a polyorganosiloxane having a reactive group at a terminal thereof (such as a polyorganosiloxane represented by the following general formula (2) or (3)) in a water-insoluble organic solvent (such as methylene chloride) ; adding an aqueous solution of a dihydric phenol represented by the following general formula (1) (such as bisphenol A) in an aqueous solution of alkaline compound (such as aqueous sodium hydroxide) to the solution; and subjecting the mixture to an interfacial polycondensation reaction, in the presence of polymerization catalyst such as a tertiary amine (such as triethylamine) or a quaternary ammonium salt (such as trimethylbenzylammonium chloride), and a molecular weight modifier (terminal stopper) (a monohydric phenol such as p-t-butylphenol) . The content of the polyorganosiloxane block moiety containing the repeating unit represented by the general formula (II) in the PC-POS (A-1) component can be adjusted by, for example, adjusting the usage amount of the polyorganosiloxane.

After the interfacial polycondensation reaction, the resultant is appropriately left at rest to be separated into an aqueous phase and a water-insoluble organic solvent phase [separating step], the water-insoluble organic solvent phase is washed (preferably washed with a basic aqueous solution, an acidic aqueous solution, and water in the stated order) [washing step], and the resultant organic phase is concentrated [concentrating step], pulverized [pulverizing step], and dried [drying step]. Thus, the PC-POS can be obtained. The content of the polyorganosiloxane block moiety in the component (A) can be adjusted by adjusting a usage ratio between the PC-POS (A-1) component whose polyorganosiloxane block content has been adjusted and the polycarbonate resin (A) formed of the aromatic polycarbonate resin (A-2) except the component (A-1).

In addition, the PC-POS can be produced by copolymerizing a dihydric phenol represented by the following general formula (1), a polyorganosiloxane represented by the following general formula (2), and phosgene, a carbonate, or a chloroformate.

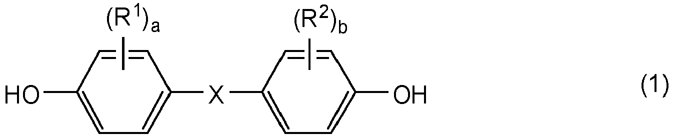

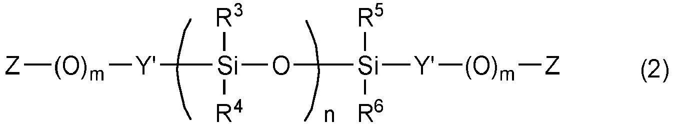

Here, in the general formula (1), R¹ and R², X, a, and b are the same as those in the general formula (I), and in the general formula (2), R³ to R⁶ are the same as those in the general formula (II'), n is the same as that in the general formula (II), and Y' is the same as Y in the general formula (II').

m represents 0 or 1, Z represents a halogen atom, -R⁷OH, -R⁷COOH, -R⁷NH₂, -R⁷NHR⁸, -COOH, or -SH, R⁷ represents a linear, branched, or cyclic alkylene group, an aryl-substituted alkylene group that may have an alkoxy group on an aromatic ring thereof, an arylene group, or a diarylene group, and R⁸ represents an alkyl group, an alkenyl group, an aryl group, an aralkyl group, or an alkoxy group.

The diarylene group refers to a group obtained by linking two arylene groups directly or through a divalent organic group, and is specifically a group having a structure represented by -Ar¹-W-Ar²-. Here, Ar¹ and Ar² each represent an arylene group, and W represents a single bond or a divalent organic group. Specific examples and suitable examples of W are the same as those of X in the general formula (I).

An example of the linear or branched alkylene group represented by R⁷ is an alkylene group having 1 to 8 carbon atoms, preferably 1 to 5 carbon atoms. An example of the cyclic alkylene group is a cycloalkylene group having 5 to 15 carbon atoms, preferably 5 to 10 carbon atoms. An example of the alkylene moiety of the aryl-substituted alkylene group represented by R⁷ is an alkylene group having 1 to 8 carbon atoms, preferably 1 to 5 carbon atoms. Examples of the aryl moiety of the aryl-substituted alkylene group represented by R⁷ include aryl groups each having 6 to 14 ring-forming carbon atoms, such as a phenyl group, a naphthyl group, a biphenyl group, and an anthryl group. Examples of the arylene group represented by any one of R⁷, Ar¹, and Ar² include arylene groups each having 6 to 14 ring-forming carbon atoms, such as a phenylene group, a naphthylene group, a biphenylene group, and an anthrylene group.

Y' preferably represents a single bond, or a divalent organic residue containing -C (=O) -, an aliphatic group, or an aromatic group, and being bonded to Si and O or to Si and Z. R³ to R⁶ each preferably represent a hydrogen atom, an alkyl group having 1 to 6 carbon atoms, an alkoxy group having 1 to 6 carbon atoms, or an aryl group having 6 to 12 carbon atoms. n is the same as that in the foregoing, and m represents 0 or 1.

Z preferably represents -R⁷OH, -R⁷COOH, -R⁷NH₂, -COOH, or -SH. The R⁷ is as defined above, and preferred examples thereof are also the same as those of above.

R⁸ preferably represents an alkyl group, an alkenyl group, an aryl group, or an aralkyl group.

The dihydric phenol represented by the general formula (1) serving as a raw material for the PC-POS is not particularly limited, but is suitably 2,2-bis(4-hydroxyphenyl)propane [trivial name: bisphenol A]. When bisphenol A is used as the dihydric phenol, in the resultant PC-POS, X represents an isopropylidene group and a=b=0 in the general formula (I).

Examples of the dihydric phenol except bisphenol A include: bis(hydroxyaryl)alkanes, such as bis(4-hydroxyphenyl)methane, 1,1-bis(4-hydroxyphenyl)ethane, 2,2-bis(4-hydroxyphenyl)butane, 2,2-bis(4-hydroxyphenyl)octane, bis(4-hydroxyphenyl)phenylmethane, bis(4-hydroxyphenyl)diphenylmethane, 2,2-bis(4-hydroxy-3-methylphenyl)propane, bis(4-hydroxyphenyl)naphthylmethane, 1,1-bis(4-hydroxy-3-t-butylphenyl)propane, 2,2-bis(4-hydroxy-3-bromophenyl)propane, 2,2-bis(4-hydroxy-3,5-dimethylphenyl)propane, 2,2-bis(4-hydroxy-3-chlorophenyl)propane, 2,2-bis(4-hydroxy-3,5-dichlorophenyl)propane, and 2,2-bis(4-hydroxy-3,5-dibromophenyl)propane; bis(hydroxyaryl)cycloalkanes, such as 1,1-bis(4-hydroxyphenyl)cyclopentane, 1,1-bis(4-hydroxyphenyl)cyclohexane, 1,1-bis(4-hydroxyphenyl)-3,5,5-trimethylcyclohexane, 2,2-bis(4-hydroxyphenyl)norbornane, and 1,1-bis(4-hydroxyphenyl)cyclododecane; dihydroxyaryl ethers, such as 4,4'-dihydroxydiphenyl ether and 4,4'-dihydroxy-3,3'-dimethylphenyl ether; dihydroxydiaryl sulfides, such as 4,4'-dihydroxydiphenyl sulfide and 4,4'-dihydroxy-3,3'-dimethyldiphenyl sulfide; dihydroxydiaryl sulfoxides, such as 4,4'-dihydroxydiphenyl sulfoxide and 4,4'-dihydroxy-3,3'-dimethyldiphenyl sulfoxide; dihydroxydiaryl sulfones, such as 4,4'-dihydroxydiphenyl sulfone and 4,4'-dihydroxy-3,3'-dimethyldiphenyl sulfone; dihydroxydiphenyls, such as 4,4'-dihydroxydiphenyl; dihydroxydiarylfluorenes, such as 9,9-bis(4-hydroxyphenyl)fluorene and 9,9-bis(4-hydroxy-3-methylphenyl)fluorene; dihydroxydiaryladamantanes, such as 1,3-bis(4-hydroxyphenyl)adamantane, 2,2-bis(4-hydroxyphenyl)adamantane, and 1,3-bis(4-hydroxyphenyl)-5,7-dimethyladamantane; 4,4'-[1,3-phenylenebis(1-methylethylidene)]bisphenol; 10,10-bis(4-hydroxyphenyl)-9-anthrone; and 1,5-bis(4-hydroxyphenylthio)-2,3-dioxapentaene.

One of those dihydric phenols may be used alone, or two or more thereof may be used as a mixture.

The polyorganosiloxane represented by the general formula (2) can be easily produced by subjecting a phenol having an olefinically unsaturated carbon-carbon bond (preferably vinylphenol, allylphenol, eugenol, isopropenylphenol, or the like) to a hydrosilylation reaction with a terminal of a polyorganosiloxane chain having a predetermined polymerization degree (n; number of repetitions). The phenol is more preferably allylphenol or eugenol.

The polyorganosiloxane represented by the general formula (2) is preferably one in which R³ to R⁶ each represent a methyl group.

Examples of the polyorganosiloxane represented by the general formula (2) include compounds represented by the following general formulae (2-1) to (2-10) .

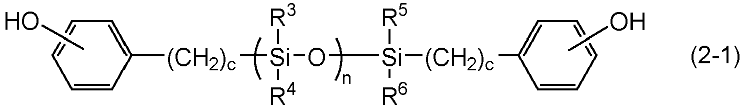

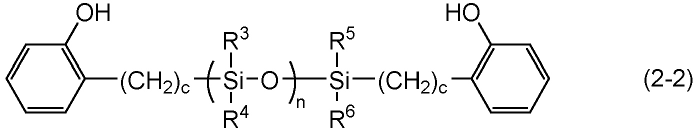

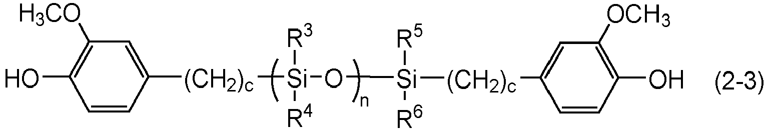

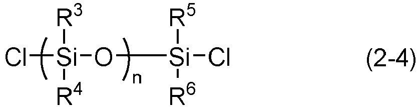

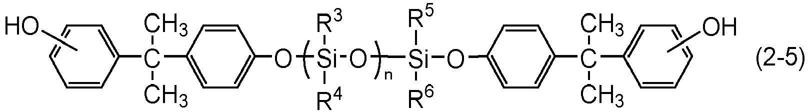

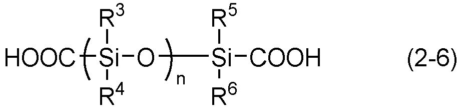

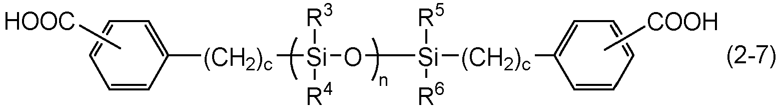

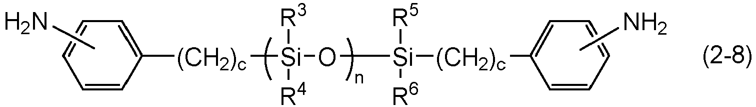

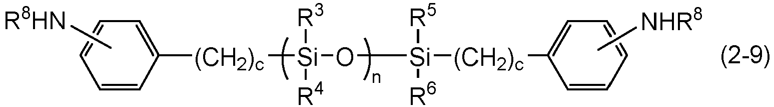

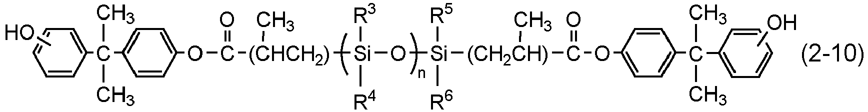

In the general formulae (2-1) to (2-10), R³ to R⁶, n, and R⁸ are as defined above, and preferred examples thereof are also the same as those of above. c represents a positive integer and typically represents an integer of from 1 to 6.

Among them, a phenol-modified polyorganosiloxane represented by the general formula (2-1) is preferred from the viewpoint of its ease of polymerization. In addition, an *α,ω*-bis[3-(o-hydroxyphenyl)propyl]polydimethylsiloxane, which is one kind of compound represented by the general formula (2-2), or an *α,ω*-bis[3-(4-hydroxy-3-methoxyphenyl)propyl]polydimethylsiloxane, which is one of compound represented by the general formula (2-3), is preferred from the viewpoint of its ease of availability.

The phenol-modified polyorganosiloxane can be produced by a known method. For example, the following method is given as the production method.

First, cyclotrisiloxane and disiloxane are caused to react with each other in the presence of an acid catalyst to synthesize an *α,ω-*dihydrogen organopolysiloxane. At this time, an *α,ω-*dihydrogen polyorganosiloxane having a desired average number of repetitions can be synthesized by changing a blending ratio between cyclotrisiloxane and disiloxane. Then, the *α,ω-*dihydrogen polyorganosiloxane is subjected to an addition reaction with a phenol compound having an unsaturated aliphatic hydrocarbon group, such as allylphenol or eugenol, in the presence of a catalyst for a hydrosilylation reaction, whereby a phenol-modified polyorganosiloxane having a desired average number of repetitions can be produced.

In addition, at this stage, a cyclic polyorganosiloxane having a low molecular weight and an excessive amount of the phenol compound remain as impurities. Accordingly, those low-molecular weight compounds are preferably removed by distillation with heating under reduced pressure.

Further, the PC-POS may be a copolymer produced by copolymerizing the dihydric phenol represented by the general formula (1), a polyorganosiloxane represented by the following general formula (3), and phosgene, a carbonate, or a chloroformate. The polyorganosiloxane represented by the general formula (3) is a product of a reaction between the polyorganosiloxane represented by the general formula (2) and a diisocyanate compound, a dicarboxylic acid, or a dicarboxylic acid halide.

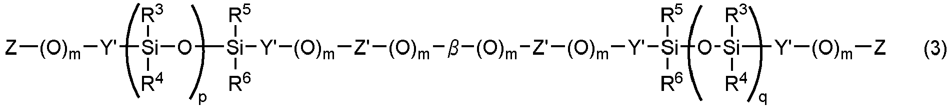

In the general formula (3), R³ to R⁶, m, p, q, Y', Z, and Z,' are as defined above, and preferred examples thereof are also the same as those of above. p = q, i.e., p = n/2 and q = n/2 can be given as preferred examples of p and q in the general formula (3) .

In addition, β represents a divalent group derived from a diisocyanate compound, a divalent group derived from a dicarboxylic acid, or a divalent group derived from a dicarboxylic acid halide, and examples thereof include divalent groups represented by the following general formulae (3-1) to (3-5).

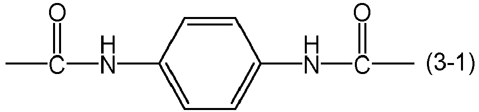

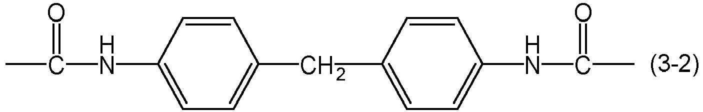

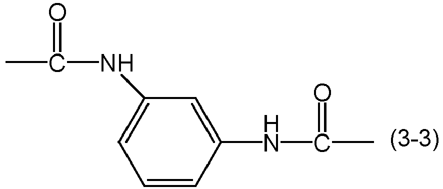

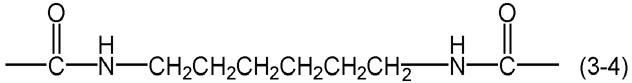

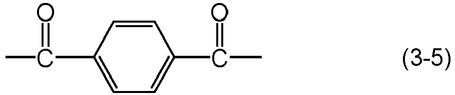

As described above, the aromatic polycarbonate resin (A-2) (hereinafter sometimes referred to as "component (A-2)") except the component (A-1) may be incorporated as the component (A) to the extent that the effects of the present invention are not impaired. The component (A-2) is obtained by using an aromatic dihydric phenol-based compound, and can be used for adjusting the content of the polyorganosiloxane block moiety containing the repeating unit represented by the general formula (II) in the component (A) .

The viscosity-average molecular weight of the aromatic polycarbonate resin serving as the component (A-2) is preferably from 10,000 to 40,000, more preferably from 13,000 to 30,000 in terms of physical properties.

The aromatic polycarbonate resin (A-2) is free of a repeating structure represented by the general formula (II), and its main chain is preferably formed of a repeating unit represented by the following general formula (III). Such aromatic polycarbonate resin is not particularly limited, and any one of the various known aromatic polycarbonate resins can be used. 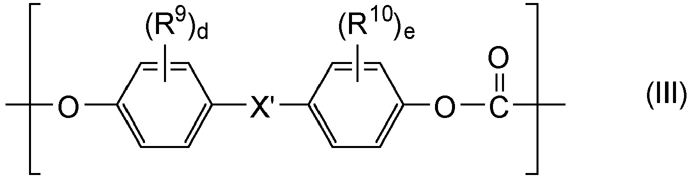 wherein R⁹ and R¹⁰ each independently represent a halogen atom, an alkyl group having 1 to 6 carbon atoms, or an alkoxy group having 1 to 6 carbon atoms, X' represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, -S-, -SO-, -SO₂-, -O-, or -CO-, and d and e each independently represent an integer of from 0 to 4.

Specific examples of R⁹ and R¹⁰ include the same examples as those of R¹ and R², and preferred examples thereof are also the same as those of R¹ and R². R⁹ and R¹⁰ each more preferably represent an alkyl group having 1 to 6 carbon atoms or an alkoxy group having 1 to 6 carbon atoms. Specific examples of X' include the same examples as those of X, and preferred examples thereof are also the same as those of X. d and e each independently represent preferably from 0 to 2, more preferably 0 or 1.

Specifically, a resin obtained by a conventional production method for an aromatic polycarbonate can be used as the aromatic polycarbonate resin. Examples of the conventional method include: an interfacial polymerization method involving causing the aromatic dihydric phenol-based compound and phosgene to react with each other in the presence of an organic solvent inert to the reaction and an aqueous alkaline solution, adding a polymerization catalyst, such as a tertiary amine or a quaternary ammonium salt, to the resultant, and polymerizing the mixture; and a pyridine method involving dissolving the aromatic dihydric phenol-based compound in pyridine or a mixed solution of pyridine and an inert solvent, and introducing phosgene to the solution to directly produce the resin.

A molecular weight modifier (terminal stopper), a branching agent, or the like is used as required in the reaction.

The aromatic dihydric phenol-based compound is, for example, a compound represented by the following general formula (III'). 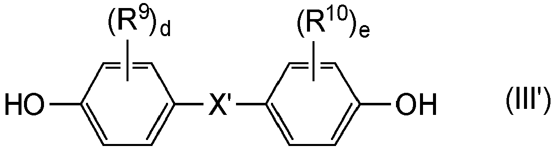 wherein R⁹, R¹⁰, X', d, and e are as defined above, and preferred examples thereof are also the same as those of above.

Specific examples of the aromatic dihydric phenol-based compound include bis (hydroxyphenyl) alkane-based dihydric phenols, such as 2,2-bis(4-hydroxyphenyl)propane [bisphenol A], bis(4-hydroxyphenyl)methane, 1,1-bis(4-hydroxyphenyl)ethane, and 2,2-bis(4-hydroxy-3,5-dimethylphenyl)propane, 4,4'-dihydroxydiphenyl, a bis(4-hydroxyphenyl)cycloalkane, bis(4-hydroxyphenyl) oxide, bis(4-hydroxyphenyl) sulfide, bis(4-hydroxyphenyl) sulfone, bis(4-hydroxyphenyl) sulfoxide, and bis(4-hydroxyphenyl) ketone.

Among them, bis (hydroxyphenyl) alkane-based dihydric phenols are preferred, and bisphenol A is more preferred.

One of the aromatic polycarbonate resins (A-2) may be used alone, or two or more thereof may be used in combination.

The viscosity-average molecular weight (Mv) of the polycarbonate resin (A) is preferably from 10,000 to 30,000, more preferably from 12,000 to 26,000. When the viscosity-average molecular weight of the component (A) falls within the range, the balance between the flowability and the impact resistance is more excellent.

The content of the polyorganosiloxane block moiety containing the repeating unit represented by the general formula (II) in the polycarbonate resin (A) is preferably from 0.75 mass% to 15 mass%, more preferably from 0.75 mass% to 10 mass%, still more preferably from 0.80 mass% to 6.0 mass%. When the content is 0.75 mass% or more, an improving effect on the impact strength of the resin composition becomes higher, and when the content is 15 mass% or less, a reduction in impact strength thereof is easily avoided.

Here, the content of the polyorganosiloxane block moiety in the component (A) can be calculated by nuclear magnetic resonance (NMR) .

The content of the component (A-1) in the component (A) is preferably from 10 mass% to 100 mass%, more preferably from 15 mass% to 100 mass%, still more preferably from 20 mass% to 100 mass% from the viewpoint that the content of the polyorganosiloxane block moiety in the component (A) is preferably adjusted to fall within the above-mentioned range.

The case where the content of the component (A-1) is 10 mass% or more is preferred in terms of the production of the PC-POS because there is no need to increase the content of the polyorganosiloxane block moiety in the component (A-1).

### [Copolymer (B)]

The polycarbonate resin composition of the present invention contains, as the component (B), the copolymer having the constituent units derived from acrylonitrile and styrene, and being free of any constituent unit derived from methyl methacrylate. When the polycarbonate resin composition contains the component (B), the resin composition is excellent in flowability. In addition, the component has the constituent unit derived from acrylonitrile and hence a resin composition having satisfactory compatibility with the component (A) can be obtained.

Examples of the component (B) include an acrylonitrile-styrene bipolymer (AS) and a copolymer that is ternary or more, the copolymer being obtained by further copolymerizing any other component with acrylonitrile and styrene.

Specific examples of the other component include polybutadiene, a (meth)acrylic acid ester (except methyl methacrylate), styrene-butadiene-styrene rubber (SBS), styrene-butadiene rubber (SBR), butadiene-acrylic rubber, isoprene rubber, isoprene-styrene rubber, isoprene-acrylic rubber, ethylene-propylene rubber, and ethylene-propylene-diene rubber. Among them, polybutadiene is particularly preferred. As the polybutadiene to be used in this case, any one of the following polybutadienes may be used, or a mixture thereof may be used: low *cis* polybutadiene (such as polybutadiene containing 1 mol% to 30 mol% of a 1,2-vinyl bond and 30 mol% to 42 mol% of a 1,4*-cis* bond) and high *cis* polybutadiene (such as polybutadiene containing 20 mol% or less of a 1,2-vinyl bond and 78 mol% or more of a 1,4*-cis* bond).

Specific examples of the copolymer that is ternary or more include an acrylonitrile-acrylate-styrene terpolymer (AAS), an acrylonitrile-butadiene-styrene terpolymer (ABS) obtained by polymerizing polybutadiene with acrylonitrile and styrene, and an acrylonitrile-(ethylene/propylene/diene copolymer)-styrene copolymer (AES).

One of the copolymers may be used alone, or two or more thereof may be used in combination.

Among the copolymers, the component (B) contains at least an acrylonitrile-butadiene-styrene terpolymer (B-1) (hereinafter sometimes referred to as "component (B-1)") in terms of an improvement in flowability of the resin composition and an improvement in impact resistance thereof by the incorporation of a rubber component. In addition, the component may further contain an acrylonitrile-styrene bipolymer (B-2) (hereinafter sometimes referred to as "component (B-2)") in terms of the improvement in flowability.

The content of a constituent unit derived from butadiene in the component (B-1) is preferably from 8 mass% to 75 mass%, more preferably from 30 mass% to 70 mass%, still more preferably from 50 mass% to 70 mass%. When the content of the constituent unit derived from butadiene in the component (B-1) is 8 mass% or more, the impact resistance of a molded body is further improved.

The melt volume rate (MVR) of the component (B-2) measured at a temperature of 200°C and a load of 10 kgf is preferably from 3 cm³/10 min to 150 cm³/10 min. When the MVR of the component (B-2) falls within the range, the flowability of the resin composition is further improved. In particular, when a component in which the content of the constituent unit derived from butadiene is from 30 mass% to 70 mass% is used as the component (B-1), the MVR of the component (B-2) to be used is more preferably from 50 cm³/10 minutes to 150 cm³/10 minutes from the viewpoint of an improvement in flowability of the resin composition.

The MVR can be measured by a method in conformity with ISO 1133.

As a commercial product of the ABS serving as the component (B-1) there may be given, for example, SANTAC AT-05 and KRALASTIC SXH-330 (each of which is manufactured by Nippon A&L Inc.), TOYOLAC 500 or 700 (manufactured by Toray Industries, Inc.), PA-756 (manufactured by Chi Mei Corporation), and HR181 (manufactured by Kumho Petrochemical Co., Ltd.). In addition, as a commercial product of the AS serving as the component (B-2), there may be given, for example, 290FF (manufactured by Techno Polymer Co., Ltd.), S100N, S200N, and S101N (manufactured by UMG ABS, Ltd.), and PN-117C (manufactured by Chi Mei Corporation).

### [Copolymer (C)]

The polycarbonate resin composition of the present invention contains, as the component (C), the copolymer having the constituent units derived from butadiene and methyl methacrylate. The incorporation of the component (C) can provide a resin composition particularly excellent in impact resistance.

Examples of the component (C) include a methyl methacrylate-butadiene-styrene terpolymer (MBS) obtained by polymerizing polybutadiene with methyl methacrylate and styrene, a methyl methacrylate-acrylonitrile-butadiene-styrene quaterpolymer (MABS), and a methyl methacrylate-butadiene bipolymer (MB).

One of the copolymers may be used alone, or two or more thereof may be used in combination. The component (C) preferably contains one or more kinds selected from a methyl methacrylate-butadiene-styrene terpolymer and a methyl methacrylate-butadiene bipolymer among them in terms of an improvement in impact resistance of the resin composition.

As a commercial product of the MBS, there may be given, for example, METABLEN C223A (manufactured by Mitsubishi Rayon Co., Ltd.), DENKA TH Polymer (manufactured by Denka Company Limited), KANE ACE B (manufactured by Kaneka Corporation), and PARALOID EXL2620 (manufactured by The Dow Chemical Company). As a commercial product of the MABS, there may be given, for example, DENKA CL Polymer, DENKA TE Polymer, and DENKA TP Polymer (all of which are manufactured by Denka Company Limited) . As a commercial product of the MB, there may be given, for example, KANE ACE M-711 (manufactured by Kaneka Corporation) and PARALOID EXL2603 and PARALOID EXL2690 (each of which is manufactured by The Dow Chemical Company).

Here, in the polycarbonate resin composition of the present invention, preferred contents of the component (B-1), the component (B-2), and the component (C) with respect to 100 parts by mass of the component (A) are as described below. When the contents of the respective components fall within the following ranges, the balance between the flowability and the impact resistance becomes more satisfactory.

In the polycarbonate resin composition of the present invention, it is preferred that the content of the component (B-1) be from 8 parts by mass to 100 parts by mass, the content of the component (B-2) be 25 parts by mass or less, and the content of the component (C) be from 0.5 part by mass to 8 parts by mass with respect to 100 parts by mass of the component (A). It is more preferred that the content of the component (B-1) be from 8 parts by mass to 50 parts by mass, the content of the component (B-2) be from 1 part by mass to 20 parts by mass, and the content of the component (C) be from 1 part by mass to 5 parts by mass. In addition, when the content of the constituent unit derived from butadiene in the component (B-1) is from 30 mass% to 70 mass%, the contents are preferably as follows: the content of the component (B-1) is from 8 parts by mass to 15 parts by mass, the content of the component (B-2) is from 10 parts by mass to 25 parts by mass, and the content of the component (C) is from 1 part by mass to 5 parts by mass with respect to 100 parts by mass of the component (A).

In the polycarbonate resin composition of the present invention, the content of the polyorganosiloxane block moiety containing the repeating unit represented by the general formula (II) is from 0.70 mass% to 10 mass%, preferably from 0.70 mass% to 8.0 mass%, more preferably from 0.70 mass% to 5.0 mass% in the entire resin composition.

In the case where the content is less than 0.50 mass%, the impact strength of a molded body to be obtained is insufficient. In addition, the case where the content is 10 mass% or less is preferred in terms of economic efficiency.

Here, the content of the polyorganosiloxane block moiety in the resin composition is a value calculated by nuclear magnetic resonance (NMR) measurement.

In addition, the polycarbonate resin composition of the present invention is such that the content of the constituent unit derived from butadiene in the entire resin composition is preferably from 3 mass% to 10 mass%. When the content of the constituent unit derived from butadiene is less than 3 mass%, the impact resistance of the molded body is insufficient, and when the content is more than 10 mass%, reductions in flowability and flame retardancy thereof occur. From the above viewpoints, the polycarbonate resin composition of the present invention is such that the content of the constituent unit derived from butadiene in the entire resin composition is preferably from 3 mass% to 8 mass%, more preferably from 3.5 mass% to 6 mass%.

Further, the polycarbonate resin composition of the present invention is such that the content of the constituent unit derived from styrene in the entire resin composition is preferably from 5 mass% to 35 mass%, and the content of the constituent unit derived from acrylonitrile therein is preferably from 3 mass% to 10 mass%. When the content of the constituent unit derived from styrene is 5 mass% or more, the flowability becomes more satisfactory, and when the content is 35 mass% or less, a reduction in impact resistance of the molded body is easily avoided. In addition, when the content of the constituent unit derived from acrylonitrile is 3 mass% or more, the compatibility with the component (A) becomes more satisfactory, and when the content is 10 mass% or less, the reduction in impact resistance of the molded body is easily avoided.

From the above viewpoints, in the polycarbonate resin composition of the present invention, the content of the constituent unit derived from styrene is more preferably from 7 mass% to 20 mass%, still more preferably from 8 mass% to 15 mass%. In addition, the content of the constituent unit derived from acrylonitrile is more preferably from 3 mass% to 8 mass%, still more preferably from 3 mass% to 6 mass%.

In the polycarbonate resin composition of the present invention, the total content of the polyorganosiloxane block moiety containing the repeating unit represented by the general formula (II) and the constituent unit derived from butadiene is preferably from 3.5 mass% to 15 mass%, more preferably from 4.0 mass% to 10 mass%. Each of the polyorganosiloxane block moiety and the constituent unit derived from butadiene improves the impact resistance of the resin composition. Accordingly, when the total content is 3.5 mass% or more, higher impact resistance can be obtained. In addition, when the total content is 15 mass% or less, a reduction in flowability thereof can be further suppressed.

### [Flame Retardant (D)]

The polycarbonate resin composition of the present invention further contains, as the component (D), a flame retardant.

The flame retardant is not particularly limited as long as the flame retardant has an improving effect on the flame retardancy of the resin composition within the scope of the effects of the present invention, and examples thereof include various known flame retardants, such as a halogen-based flame retardant, a phosphorus-based flame retardant, and a metal salt-based flame retardant. Among those various known flame retardants, a phosphorus-based flame retardant is preferably used as the component (D) from the viewpoint that high flame retardancy is imparted to the resin composition.

Examples of the phosphorus-based flame retardant include red phosphorus- and phosphate-based flame retardants.

In particular, the phosphate-based flame retardant is preferably a halogen-free flame retardant. An example thereof is a halogen-free flame retardant formed of a monomer, an oligomer, or a polymer of a phosphate or a mixture thereof. Specific examples thereof include trimethyl phosphate, triethyl phosphate, tributyl phosphate, trioctyl phosphate, tributoxyethyl phosphate, triphenyl phosphate, tricresyl phosphate, cresyl diphenyl phosphate, octyl diphenyl phosphate, tri(2-ethylhexyl) phosphate, diisopropyl phenyl phosphate, trixylenyl phosphate, tris (isopropylphenyl) phosphate, trinaphthyl phosphate, bisphenol A bisphosphate, hydroquinone bisphosphate, resorcin bisphosphate, resorcinol-diphenyl phosphate, and trioxybenzene triphosphate as well as substituted products and condensed products thereof. Among them, a condensed phosphate is preferably used.

As a commercial phosphate compound that may be suitably used as the phosphate-based flame retardant, there may be given, for example, TPP [triphenyl phosphate], TXP [trixylenyl phosphate], CR733S [resorcinol bis(diphenyl phosphate)], CR741 [bisphenol A bis(diphenyl phosphate)], PX200 [1,3-phenylene-tetrakis(2,6-dimethylphenyl) phosphate], PX201L [1,4-phenylene-tetrakis(2,6-dimethylphenyl) phosphate], and PX202 [4,4'-biphenylene-tetrakis(2,6-dimethylphenyl) phosphate] manufactured by Daihachi Chemical Industry Co., Ltd.

The phosphate-based flame retardant is obtained by a reaction among a dihydric phenol, a monohydric phenol represented by Ar·OH, and phosphorus oxychloride.

One of those flame retardants may be used alone, or two or more thereof may be used in combination.

The content of the component (D) in the polycarbonate resin composition of the present invention is preferably from 10 parts by mass to 40 parts by mass, more preferably from 10 parts by mass to 30 parts by mass, still more preferably from 15 parts by mass to 30 parts by mass with respect to 100 parts by mass of the component (A) . When the content is 10 parts by mass or more, more satisfactory flame retardancy is obtained and the flowability of the resin composition is further improved. In addition, when the content is 40 parts by mass or less, the impact resistance and heat resistance of the resin composition are easily maintained.

### [Other Component]

Any other component can be appropriately incorporated into the polycarbonate resin composition of the present invention to the extent that the effects of the present invention are not remarkably impaired.

Examples of the other component include additives such as an antioxidant, a UV absorber, a release agent, a flame retardant aid, an inorganic filler, and a colorant (a dye or a pigment).

Examples of the antioxidant include a phosphorus-based antioxidant, a sulfur-based antioxidant, and a phenol-based antioxidant.

The phosphorus-based antioxidant is not particularly limited. Typical examples thereof include tris(nonylphenyl) phosphite and 2-ethylhexyl diphenyl phosphite as well as a trialkyl phosphite, a tricycloalkyl phosphite, a triaryl phosphite, a trialkyl phosphate, a tricycloalkyl phosphate, and a triaryl phosphate. Among them, a triaryl phosphite or a triaryl phosphate is suitably used.

The sulfur-based antioxidant is not particularly limited, and is preferably pentaerythritol tetrakis (3-laurylthiopropionate) or tetrakis[methylene-3-(dodecylthio)propionate]methane.

The phenol-based antioxidant is not particularly limited. Hindered phenol-based antioxidants are suitably used. Among them, octadecyl 3-(3,5-di-*tert*-butyl-4-hydroxyphenyl)propionate, pentaerythritol-tetrakis[3-(3,5-di-*t*-butyl-4-hydroxyphenyl)pro pionate], 1,6-hexanediol-bis[3-(3,5-di-*tert*-butyl-4-hydroxyphenyl)propionate], 1,3,5-trimethyl-2,4,6-tris(3,5-di-*tert*-butyl-4-hydroxybenzyl)benzene, or the like is preferred.

In the present invention, when any of the antioxidants is used, one thereof may be used alone, or two or more thereof may be used in combination. The phosphorus-based antioxidant is preferably used as the antioxidant. It is more preferred that the phosphorus-based antioxidant be used alone, or the phosphorus-based antioxidant and the sulfur-based antioxidant and/or the phenol-based antioxidant be used in combination.

The blending amount of the antioxidant is preferably from 0.001 part by mass to 5 parts by mass, more preferably from 0.005 part by mass to 3 parts by mass, still more preferably from 0.01 part by mass to 1 part by mass with respect to 100 parts by mass of the component (A) . When the blending amount of the antioxidant falls within the range, the discoloration of the resin composition and a reduction in molecular weight thereof at the time of its molding can be sufficiently prevented, and its antioxidant effect can be improved.

For example, the following UV absorber may be used: a benzophenone-based, benzotriazole-based, hydroxyphenyltriazine-based, cyclic imino ester-based, or cyanoacrylate-based UV absorber. One of the UV absorbers may be used alone, or two or more thereof may be used in combination. As the UV absorber, at least one kind selected from a benzophenone-based UV absorber and a benzotriazole-based UV absorber is preferably used, and a benzotriazole-based UV absorber is more preferably used.

Examples of the benzophenone-based UV absorber include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxy trihydrate benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodium sulfoxybenzophenone, bis(5-benzoyl-4-hydroxy-2-methoxyphenyl)methane, 2-hydroxy-4-*n*-dodecyloxybenzophenone, and 2-hydroxy-4-methoxy-2'-carboxybenzophenone.

Examples of the benzotriazole-based UV absorber include 2-(2-hydroxy-5-methylphenyl)benzotriazole, 2-(2-hydroxy-5-*tert*-octylphenyl)benzotriazole, 2-(2-hydroxy-3,5-dicumylphenyl)phenylbenzotriazole, 2-(2-hydroxy-3-*tert*-butyl-5-methylphenyl)-5-chlorobenzotriazole, 2,2'-methylenebis[4-(1,1,3,3-tetramethylbutyl)-6-(2*H*-benzotriazol-2-yl)phenol], 2-(2-hydroxy-3,5-di-*tert*-butylphenyl)benzotriazole, 2-(2-hydroxy-3,5-di-*tert*-butylphenyl)-5-chlorobenzotriazole, 2-(2-hydroxy-3,5-di-*tert-*amylphenyl)benzotriazole, 2-(2-hydroxy-5-*tert*-octylphenyl)benzotriazole, 2-(2-hydroxy-5-*tert*-butylphenyl)benzotriazole, 2-(2-hydroxy-4-octoxyphenyl)benzotriazole, 2,2'-methylenebis(4-cumyl-6-benzotriazolephenyl), 2,2'-*p*-phenylenebis(1,3-benzoxazin-4-one), and 2-[2-hydroxy-3-(3,4,5,6-tetrahydrophthalimidemethyl)-5-methylphenyl]benzotriazole as well as polymers each having a 2-hydroxyphenyl-2*H*-benzotriazole skeleton, such as a copolymer of 2-(2'-hydroxy-5-methacryloxyethylphenyl)-2*H*-benzotriazole and a vinyl-based monomer copolymerizable with the monomer and a copolymer of 2-(2'-hydroxy-5-acryloxyethylphenyl)-2*H*-benzotriazole and a vinyl-based monomer copolymerizable with the monomer.

The blending amount of the UV absorber in the polycarbonate resin composition of the present invention is preferably from 0.001 part by mass to 1 part by mass, more preferably from 0.005 part by mass to 0.7 part by mass, still more preferably from 0.01 part by mass to 0.5 part by mass with respect to 100 parts by mass of the component (A). In the case where the blending amount of the UV absorber is 0.001 part by mass or more, the occurrence of the coloring of the molded body, such as yellowing, can be sufficiently suppressed. In addition, the case where the blending amount is 1 part by mass or less is preferred in terms of economic efficiency, and in this case, the contamination of a mold does not occur at the time of the molding of the resin composition.

For example, a fatty acid ester, polyolefin-based wax, fluorine oil, or paraffin wax may be used as the release agent. Among them, a fatty acid ester is preferred, and preferred examples thereof include: partial esters, such as stearic acid monoglyceride, stearic acid diglyceride, stearic acid monosorbitate, behenic acid monoglyceride, pentaerythritol monostearate, pentaerythritol distearate, propylene glycol monostearate, sorbitan monostearate, and glycerin monostearate; and pentaerythritol tetrastearate. One of those release agents may be used alone, or two or more thereof may be used in combination.

The blending amount of the release agent in the polycarbonate resin composition of the present invention is preferably from 0.01 part by mass to 3 parts by mass, more preferably from 0.1 part by mass to 2 parts by mass, still more preferably from 0.2 part by mass to 2 parts by mass with respect to 100 parts by mass of the component (A).

The flame retardant aid is preferably used together with the flame retardant (D), and a polytetrafluoroethylene (PTFE) or an antimony oxide compound can be used as the aid. Among them, a PTFE is preferably used and a PTFE having a fibril-forming ability is desirably used. Mixed powder formed of PTFE particles and organic polymer particles is also desirably used.

As a monomer for producing the organic polymer particles, there may be specifically given, for example: a styrene-based monomer; an alkyl (meth)acrylate-based monomer; a vinyl cyanide-based monomer; a vinyl ether-based monomer; a vinyl carboxylate-based monomer; an olefin-based monomer; and a diene-based monomer. In particular, an alkyl (meth) acrylate-based monomer is preferably used. The alkyl (meth)acrylate-based monomer refers to both alkyl acrylate-based and alkyl methacrylate-based monomers.

The polymerization of those monomers provides the organic polymer particles. One of the monomers can be used, or two or more thereof can be used as a mixture. The organic polymer particles are preferably particles each formed of an alkyl (meth)acrylate-based copolymer.

The blending amount of the flame retardant aid is preferably from 0.1 part by mass to 2 parts by mass, more preferably from 0.3 part by mass to 1.5 parts by mass with respect to 100 parts by mass of the component (A).

Examples of the inorganic filler may include talc, mica, kaolin, diatomaceous earth, calcium carbonate, calcium sulfate, barium sulfate, glass fibers, carbon fibers, and potassium titanate fibers. Among them, for example, talc and mica, each of which has a plate shape, and fibrous fillers, such as glass fibers and carbon fibers, are preferred. Blending the inorganic filler can further improve the flame retardancy and dimensional stability of the resin composition.

One of those inorganic fillers may be used alone, or two or more thereof may be used in combination.

The blending amount of the inorganic filler is preferably from 0.1 part by mass to 10 parts by mass, more preferably from 0.5 part by mass to 5 parts by mass with respect to 100 parts by mass of the component (A). When the blending amount is 0.1 part by mass or more, improving effects on the flame retardancy and the dimensional stability can be sufficiently obtained. When the blending amount is 10 parts by mass or less, the flowability and impact resistance of the resin composition are easily maintained.

Examples of the colorant include dyes such as a perylene-based dye, a coumarin-based dye, a thioindigo-based dye, an anthraquinone-based dye, a thioxanthone-based dye, a ferrocyanide, a perinone-based dye, a quinoline-based dye, and a phthalocyanine-based dye.

### <Physical Properties of Polycarbonate Resin Composition>

The polycarbonate resin composition of the present invention is excellent in flowability. Specifically, the MFR of the resin composition measured at a temperature of 260°C and a load of 2.16 kg is typically 10 g/10 min or more, preferably 15 g/10 min or more, more preferably 20 g/10 min or more.

Although there is no particular upper limit for the MFR, the MFR is typically 100 g/10 min or less. The MFR can be measured in conformity with ASTM D1238.

In addition, other indices each representing the flowability of the resin composition are a Q value and a spiral flow length (SFL) . The polycarbonate resin composition of the present invention is a resin composition having a Q value measured at a temperature of 260°C and a load of 100 kg of typically 0.10 mL/sec or more, preferably 0.20 mL/sec or more, more preferably 0.25 mL/sec or more. Although there is no particular upper limit for the Q value, the Q value is typically 1.0 mL/sec or less.

Further, a spiral flow length (SFL) when the polycarbonate resin composition of the present invention is molded with a spiral flow mold having a cylinder temperature of 240°C, a mold temperature of 40°C, and a thickness of 2.0 mm at a pressure setting of 125 MPa is typically 38 cm or more, preferably 42 cm or more, more preferably 45 cm or more. The Q value and the SFL can be specifically measured by methods described in Examples.

As described above, the polycarbonate resin composition of the present invention has high flowability, and hence can be molded into, for example, a thin-walled and large-sized molded body.

The Charpy impact strength of the polycarbonate resin composition of the present invention is as follows : a measured value at a temperature of 23°C when the resin composition is molded into a molded body having a thickness of 4 mm is typically 15 kJ/m² or more, preferably 20 kJ/m² or more, more preferably 30 kJ/m² or more. The Charpy impact strength is measured by using a notched test piece produced from the molded body having a thickness of 4 mm in conformity with ISO 179 at a temperature of 23°C, and can be specifically measured by a method described in Examples.

In addition, in the polycarbonate resin composition of the present invention, it is preferred that flame retardancy under the Underwriters Laboratory Subject 94 (UL94) standard in a molded body thereof having a thickness of 1.5 mm satisfy a 5V rank. The flame retardancy can be measured by a vertical flame test in conformity with the UL94 standard, and can be specifically measured by a method described in Examples.

### <Method of producing Polycarbonate Resin Composition>

Next, a method of producing the polycarbonate resin composition of the present invention is described.

The polycarbonate resin composition of the present invention is obtained by blending the components (A), (B), and (C) and the component (D) to be used as required, and any other general component, and kneading the components.

The blending and the kneading at this time can be performed by the following method: the components are preliminarily mixed by using a typically used apparatus, such as a ribbon blender or a drum tumbler, and are then mixed by using, for example, a Henschel mixer, a Banbury mixer, a single screw extruder, a twin screw extruder, a multi-screw extruder, or a Ko-kneader.

In normal cases, a heating temperature at the time of the kneading is appropriately selected from the range of from 240°C to 300°C.

The components except the polycarbonate resin (A) can be melt-kneaded with the polycarbonate resin (A) in advance, i.e., can be added as a master batch.

### [Molded Body]

A molded body of the present invention contains the polycarbonate resin composition of the present invention.

The molded body of the present invention is obtained as follows: a composition obtained by melt-kneading the polycarbonate resin composition of the present invention with the melt-kneading molding machine, or a pellet obtained from the composition is used as a raw material, and the raw material is molded by, for example, an injection molding method, an injection compression molding method, an extrusion molding method, a blow molding method, a press molding method, a vacuum molding method, or a foam molding method.

The molded body can be particularly suitably obtained by: producing a pellet-shaped molding raw material by the melt-kneading method; and then subjecting the pellet to injection molding or injection compression molding.

A gas injection molding method for the prevention of a sink mark on the external appearance of the molded body or for the weight reduction thereof can also be adopted as an injection molding method.

### <Physical Properties of Molded Body>

The molded body of the polycarbonate resin composition of the present invention obtained as described above has the following characteristic values: the bending strength of a test piece having a thickness of 4 mm, which is produced from the molded body, measured in conformity with ISO 178 at 23°C is typically from 85 MPa to 95 MPa, and the bending modulus thereof is typically from 2,000 MPa to 3,000 MPa.

Each of the characteristic values is specifically measured by a method described in Examples.

The molded body of the present invention is excellent in heat resistance. Specifically, the heat deflection temperature (HDT) of a test piece having a thickness of 4 mm, which is produced from the molded body, measured at a load of 1.8 MPa is typically 70°C or more, preferably 75°C or more. The HDT can be measured in conformity with ISO 75-1,2, and can be specifically measured by a method described in Examples.

The polycarbonate resin composition of the present invention and the molded body containing the resin composition can each be suitably used in, for example, an automobile part (such as an exterior, an interior, or a meter panel), or the housing of electronic equipment or information equipment.

### EXAMPLES

The present invention is described in more detail by way of Examples. However, the present invention is by no means limited by these Examples.

### Preparation Example 1

### <Production of Polycarbonate Oligomer>

Sodium dithionite was added in an amount of 2,000 ppm with respect to bisphenol A (BPA) to be dissolved later to 5.6 mass% aqueous sodium hydroxide, and then bisphenol A was dissolved in the mixture so that the concentration of bisphenol A was 13.5 mass%. Thus, a solution of bisphenol A in aqueous sodium hydroxide was prepared.

The solution of bisphenol A in aqueous sodium hydroxide, methylene chloride, and phosgene were continuously passed through a tubular reactor having an inner diameter of 6 mm and a tube length of 30 m at flow rates of 40 L (L is hereinafter used as an abbreviation of liter(s))/hr, 15 L/hr, and 4.0 kg/hr, respectively.

The tubular reactor had a jacket portion and the temperature of the reaction liquid was kept at 40°C or less by passing cooling water through the jacket.

The reaction liquid that had exited the tubular reactor was continuously introduced into a baffled vessel type reactor provided with a sweptback blade and having an internal volume of 40 L. The solution of bisphenol A in aqueous sodium hydroxide, 25 mass% aqueous sodium hydroxide, water, and a 1 mass% aqueous solution of triethylamine were further added to the reactor at flow rates of 2.8 L/hr, 0.07 L/hr, 17 L/hr, and 0.64 L/hr, respectively, to perform a reaction.

An aqueous phase was separated and removed by continuously taking out the reaction liquid overflowing the vessel type reactor and leaving the reaction liquid at rest. Then, a methylene chloride phase was collected.

The polycarbonate oligomer thus obtained had a concentration of 329 g/L and a chloroformate group concentration of 0.74 mol/L.

### Production Example 1

### <Production of Polycarbonate-polydimethylsiloxane Copolymer (PC-PDMS Copolymer 1)>

15 L of the polycarbonate oligomer solution produced in Preparation Example 1, 9.0 L of methylene chloride, 384 g of an o-allylphenol terminal-modified polydimethylsiloxane (PDMS) having an average number n of repetitions of a dimethylsiloxane repeating unit of 90, and 8.8 mL of triethylamine were loaded into a 50 L vessel type reactor provided with a baffle board, a paddle type stirring blade, and a cooling jacket. 1,389 g of 6.4 mass% aqueous sodium hydroxide was added to the mixture under stirring to perform a reaction between the polycarbonate oligomer and the allylphenol terminal-modified PDMS for 10 minutes.

A solution of p-t-butylphenol (PTBP) in methylene chloride (prepared by dissolving 137 g of PTBP in 2.0 L of methylene chloride) and a solution of bisphenol A in aqueous sodium hydroxide (prepared by dissolving 1,012 g of bisphenol A in an aqueous solution prepared by dissolving 577 g of sodium hydroxide and 2.0 g of sodium dithionite in 8.4 L of water) were added to the polymerization liquid to perform a polymerization reaction for 50 minutes.

10 L of methylene chloride was added to the resultant for dilution and then the mixture was stirred for 10 minutes. After that, the mixture was separated into an organic phase containing a polycarbonate-polydimethylsiloxane copolymer (PC-PDMS copolymer), and an aqueous phase containing excess amounts of bisphenol A and sodium hydroxide, and then the organic phase was isolated.

The solution of the PC-PDMS copolymer in methylene chloride thus obtained was sequentially washed with 0.03 mol/L aqueous sodium hydroxide and 0.2 mol/L hydrochloric acid in amounts of 15 vol% each with respect to the solution. Next, the solution was repeatedly washed with pure water until an electric conductivity in an aqueous phase after the washing became 0.01 µS/m or less.

The solution of the PC-PDMS copolymer in methylene chloride obtained by the washing was concentrated and pulverized, and then the resultant flake was dried under reduced pressure at 120°C. Thus, a PC-PDMS copolymer 1 was produced.

The content of the PDMS block moiety of the resultant PC-PDMS copolymer 1 determined by nuclear magnetic resonance (NMR) was 6.0 mass%, and the viscosity number and viscosity-average molecular weight Mv of the copolymer were 47.5 and 17,700, respectively.

### Production Example 2

### <Production of Polycarbonate-polydimethylsiloxane Copolymer (PC-PDMS Copolymer 2)>

A PC-PDMS copolymer 2 was produced in the same manner as in Production Example 1 except that an *o*-allylphenol terminal-modified PDMS having an average number n of repetitions of a dimethylsiloxane repeating unit of 40 was used.

The content of the PDMS block moiety of the resultant PC-PDMS copolymer 2 determined by NMR was 6.0 mass%, and the viscosity number and viscosity-average molecular weight Mv of the copolymer were 47.5 and 17,700, respectively.

The average number of repetitions of the PDMS of the allylphenol terminal-modified polydimethylsiloxane used in each of the production examples, the usage amount of the PDMS, the usage amount of *p*-*t*-butylphenol (PTBP), and the content of the PDMS block moiety, viscosity number, and viscosity-average molecular weight Mv of each of the resultant polycarbonate-polydimethylsiloxane copolymers are shown in Table 1. The viscosity number measured in each of Production Examples of the present invention is a value measured in conformity with ISO 1628-4 (1999).

**Table 1**

| | Production Example | |
|---|---|---|
| | 1 | 2 |
| Average number n of repetitions of PDMS | 90 | 40 |
| Usage amount of PDMS (g) | 384 | 384 |
| Usage amount of PTBP (g) | 137 | 137 |
| Content of PDMS block moiety (mass%) | 6.0 | 6.0 |
| Viscosity number | 47.5 | 47.5 |
| Viscosity-average molecular weight Mv | 17,700 | 17,700 |

### [Performance Evaluation]

### <Flowability Evaluation>

### (MFR)

A MFR at a temperature of 260°C and a load of 2.16 kg was measured in conformity with ASTM D1238.

### (Q Value)

A Q value at a temperature of 260°C and a load of 100 kg was measured in conformity with JIS K7210 with a Koka flow tester.

### (SFL Value)

A flow length (cm) when a pellet obtained in each of the examples was molded with a spiral flow mold having a cylinder temperature of 240°C, a mold temperature of 40°C, and a thickness of 2.0 mm at a pressure setting of 125 MPa was measured.

### <Impact Resistance Evaluation>

### (Charpy Impact Strength)

A notched test piece was produced from a test piece having a thickness of 4 mm obtained in each of the examples, and its Charpy impact strength was measured in conformity with ISO 179 at a temperature of 23°C. A larger numerical value therefor means that the impact resistance of the test piece is more satisfactory.

### <Mechanical Characteristic Evaluation>

### (Bending Test)

The bending strength and bending modulus of the test piece having a thickness of 4 mm obtained in each of the examples were measured in conformity with ISO 178 under the conditions of a temperature of 23°C and a bending rate of 2 mm/min. Larger numerical values for the bending strength and the bending modulus mean that the bending characteristics of the test piece are more satisfactory.

### <Heat Resistance Evaluation>

### (Heat Deflection Temperature)

The heat deflection temperature (HDT) of the test piece having a thickness of 4 mm obtained in each of the examples was measured in conformity with the measurement method of ISO 75-1,2 at a load of 1.8 MPa. A higher heat deflection temperature means that the heat resistance of the test piece is more satisfactory.

### <Flame Retardancy Evaluation>

### (UL94 Combustibility)

A test piece measuring 127 mm long by 12.7 mm wide by 1.5 mm thick obtained in each of the examples was subjected to a 5V flame test (n=5) in conformity with an Underwriters Laboratory Subject 94 (UL94) vertical flammability test, and the total (seconds) of 5 combustion times was determined. In addition, a flame retardancy evaluation was performed by judging whether or not a 5V rank was satisfied.

In the flame retardancy evaluation of Table 2, a molded body that satisfied the 5V rank is represented by "5V", and a molded body that did not satisfy the 5V rank is represented by "5V-OUT".

### Examples 1 to 8 and Comparative Examples 1 to 8 (Example 1 is not according to the invention)

Respective components were mixed at ratios shown in Table 2, and the mixture was granulated with a vented single screw extruder having a diameter of 50 mm at a resin temperature of 280°C to provide a pellet formed of a polycarbonate resin composition.

The pellet obtained by the method was subjected to injection molding with an injection molding machine (model number; IS100EN, manufactured by Toshiba Machine Co., Ltd.) under the molding conditions of a cylinder temperature of 240°C and a mold temperature of 40°C to provide a test piece. The foregoing performance evaluations were performed by using the resultant test piece.

Details about the respective components shown in Table 2 used in Examples and Comparative Examples are as described below.

### <Polycarbonate-polyorganosiloxane Copolymer (A-1)>

PC-PDMS copolymer 1 (polycarbonate-polydimethylsiloxane copolymer described in Production Example 1)
PC-PDMS copolymer 2 (polycarbonate-polydimethylsiloxane copolymer described in Production Example 2)

### <Aromatic Polycarbonate Resin (A-2)>

TARFLON FN2200 (bisphenol A polycarbonate, manufactured by Idemitsu Kosan Co., Ltd., viscosity number: 56.1, viscosity-average molecular weight Mv=21,500)
TARFLON FN1900 (bisphenol A polycarbonate, manufactured by Idemitsu Kosan Co., Ltd., viscosity number: 51.0, viscosity-average molecular weight Mv=19,200)
TARFLON FN1700 (bisphenol A polycarbonate, manufactured by Idemitsu Kosan Co., Ltd., viscosity number: 47.5, viscosity-average molecular weight Mv=17,700)

### <Acrylonitrile-butadiene-styrene Terpolymer (B-1)>

KRALASTIC SXH-330 (acrylonitrile-butadiene-styrene terpolymer (ABS), manufactured by Nippon A&L Inc., content of constituent unit derived from butadiene; 12 mass%)
HR181 (acrylonitrile-butadiene-styrene terpolymer (ABS), manufactured by Kumho Petrochemical Co., Ltd., content of constituent unit derived from butadiene; 60 mass%)
SANTAC AT05 (acrylonitrile-butadiene-styrene terpolymer (ABS), manufactured by Nippon A&L Inc., content of constituent unit derived from butadiene; 14 mass%)

### <Acrylonitrile-styrene Bipolymer (B-2)>

S101N (acrylonitrile-styrene bipolymer (AS), manufactured by UMG ABS, Ltd., MVR [temperature: 200°C, load: 10 kgf]; 95 cm³/10 min)

### <Copolymer (C)>

PARALOID EXL2603 (methyl methacrylate-butadiene bipolymer (MB), manufactured by The Dow Chemical Company)
METABLEN C223A (methyl methacrylate-butadiene-styrene terpolymer (MBS), manufactured by Mitsubishi Rayon Co., Ltd.)

### <Flame Retardant (D)>

CR-741 (aromatic condensed phosphate-based flame retardant, manufactured by Daihachi Chemical Industry Co., Ltd.)

### <Flame Retardant Aid>

Fluon AD939E (PTFE aqueous dispersion liquid, manufactured by Asahi Glass Co., Ltd.)

Various evaluation results are shown in Table 2.

**Table 2**

| | | | | Unit | Example | | | | | | | | Comparative Example | | | | | | | |
|---|---|---|---|---|---|---|---|---|---|---|---|---|---|---|---|---|---|---|---|---|
| | | | | | 1* | 2 | 3 | 4 | 5 | 6 | 7 | 8 | 1 | 2 | 3 | 4 | 5 | 6 | 7 | 8 |
| | (A-1) | PC-PDMS copolymer 1 | Production Example 1 | Parts by mass | 15.6 | | 22.7 | | 25.0 | | 50.0 | 50.0 | | | 12.1 | 24.2 | 22.1 | | | 100.0 |
| | | PC-PDMS copolymer 2 | Production Example 2 | Parts by mass | | 18.8 | | 22.7 | | 25.0 | | | | | | | | | 100.0 | |
| | (A-2) | Aromatic (bisphenol A) PC | FN2200 | Parts by mass | 50.0 | 50.0 | 50.0 | 50.0 | 50.0 | 50.0 | 50.0 | 50.0 | 50.0 | 50.0 | 50.0 | 48.5 | 48.5 | | | |
| | | Aromatic (bisphenol A) PC | FN1900 | Parts by mass | | | | | | | | | 50.0 | 50.0 | | | | 100.0 | | |
| | | Aromatic (bisphenol A) PC | FN1700 | Parts by mass | 34.4 | 31.3 | 27.3 | 27.3 | 25.0 | 25.0 | | | | | 37.9 | 27.3 | 29.4 | | | |
| | (B-1) | ABS | SXH-330 | Parts by mass | 26.6 | 26.6 | | | 26.6 | 26.6 | 26.6 | | 26.6 | | | 25.8 | | | | |
| Polycarbonate resin Composition | | ABS | HR181 | Parts by mass | | | 10.6 | 10.6 | | | | 10.6 | | 10.6 | 10.6 | | 10.3 | | | |
| | | ABS | AT05 | Parts by mass | | | | | | | | | | | | | | 100.0 | 100.0 | 100.0 |
| | (B-2) | AS | S101N | Parts by mass | 3.1 | 3.1 | 15.2 | 15.2 | 3.1 | 3.1 | 3.1 | 15.2 | 3.1 | 15.2 | 15.2 | 3.0 | 14.7 | | | |
| | (C) | MB | EXL2603 | Parts by mass | 3.1 | 3.1 | 3.0 | 3.0 | 3.1 | 3.1 | | 3.0 | | 3.0 | 3.0 | | | | | |
| | | MBS | C223A | Parts by mass | | | | | | | 3.1 | | 3.1 | | | | | | | |
| | (D) | Condensed phosphate-based flame retardant | CR741 | Parts by mass | 23.4 | 23.4 | 22.7 | 22.7 | 23.4 | 23.4 | 23.4 | 22.7 | 23.4 | 22.7 | 22.7 | 22.7 | 22.1 | | | |
| | Flame retardant aid | PTFE aqueous dispersion liquid | AD939E | Parts by mass | 0.8 | 0.8 | 0.8 | 0.8 | 0.8 | 0.8 | 0.8 | 0.8 | 0.8 | 0.8 | 0.8 | 0.8 | 0.8 | | | |
| | Viscosity-average molecular weight (Mv) of component (A) | | | - | 19600 | 19600 | 19600 | 19600 | 19600 | 19600 | 19600 | 19600 | 20400 | 20400 | 19600 | 19500 | 19500 | 19200 | 17700 | 17700 |
| | Content of POS moiety in component (A) | | | mass% | 0.94 | 1.13 | 1.36 | 1.36 | 1.50 | 1.50 | 3.00 | 3.00 | 0.00 | 0.00 | 0.73 | 1.45 | 1.32 | 0.00 | 6.00 | 6.00 |
| | Content (Si) of POS moiety in composition | | | mass% | 0.60 | 0.72 | 0.90 | 0.90 | 0.96 | 0.96 | 1.91 | 1.97 | 0.00 | 0.00 | 0.48 | 0.95 | 0.90 | 0.00 | 3.00 | 3.00 |
| | Content (Bd) of constituent unit derived from butadiene | | | mass% | 3.6 | 3.6 | 5.7 | 5.7 | 3.6 | 3.6 | 3.5 | 5.7 | 3.5 | 5.7 | 5.7 | 2.0 | 4.1 | 6.9 | 6.9 | 6.9 |
| | Content (St) of constituent unit derived from styrene | | | mass% | 12.0 | 12.0 | 9.2 | 9.2 | 12.0 | 12.0 | 12.0 | 9.2 | 12.0 | 9.2 | 9.2 | 12.0 | 9.2 | 6.9 | 6.9 | 6.9 |
| | Content (An) of constituent unit derived from acrylonitrile | | | mass% | 4.7 | 4.7 | 3.4 | 3.4 | 4.7 | 4.7 | 4.7 | 3.4 | 4.7 | 3.4 | 3.4 | 4.7 | 3.4 | 0.0 | 3.0 | 3.0 |
| | Bd+Si | | | mass% | 4.2 | 4.3 | 6.6 | 6.6 | 4.6 | 4.6 | 5.4 | 7.7 | 3.5 | 5.7 | 6.2 | 3.0 | 5.0 | 6.9 | 9.9 | 9.9 |
| | Flowability | MFR | 260°C, 2.16 kg | g/10 min | 30 | 32 | 25 | 28 | 28 | 31 | 31 | 23 | 35 | 20 | 28 | 42 | 33 | 20 | 16 | 16 |
| | | Q value | 260°C, 100 kg | 10⁻² mL/s | 24 | 30 | 35 | 32 | 32 | 33 | 31 | 31 | 38 | 38 | 21 | 23 | 21 | 21 | 23 | 21 |
| | | SFL (2 mm) (Sf) | 240°C/40°C /125 MPa | cm | 46 | 46 | 46 | 45 | 47 | 46 | 46 | 46 | 45 | 44 | 46 | 47 | 46 | - | - | - |
| | Impact resistance | Charpy impact strength (Ch) | 23°C | kJ/m² | 28 | 31 | 53 | 32 | 38 | 40 | 48 | 55 | 13 | 14 | 22 | 10 | 12 | 63 | 70 | 91 |
| Evaluation test | Mechanical characteristic | Bending strength | 23°C | MPa | 92 | 94 | 88 | 88 | 91 | 93 | 90 | 87 | 94 | 92 | 90 | 97 | 93 | 79 | 74 | 71 |
| | | Bending modulus | 23°C | MPa | 2,566 | 2,568 | 2,462 | 2,451 | 2,545 | 2,553 | 2,513 | 2,390 | 2,618 | 2,518 | 2,495 | 2,655 | 2,549 | 2,166 | 2,068 | 2,062 |
| | Heat resistance | Heat deflection temperature (HDT) | 1.8 MPa | °C | 77 | 77 | 77 | 76 | 77 | 77 | 75 | 75 | 77 | 78 | 77 | 77 | 77 | 96 | 92 | 93 |
| | Flame retardancy | UL94 flame test (1.5 mm) | Combustion time Vh (total of n=5) | Second(s) | 50 | 75 | 36 | 93 | 93 | 97 | 93 | 50 | 41 | 50 | 40 | 40 | 25 | - | - | - |
| | | | Judgment | | 5V | 5V | 5V | 5V | 5V | 5V | 5V | 5V | 5V | 5V | 5V | 5V | 5V | 5V-OUT | 5V-OUT | 5V-OUT |

| | | | | | | | | | | | | | | | | | | | | |
|---|---|---|---|---|---|---|---|---|---|---|---|---|---|---|---|---|---|---|---|---|
| * Example 1 is a comparative example. | | | | | | | | | | | | | | | | | | | | |

As can be seen from Table 2, the polycarbonate resin composition of the present invention is excellent in flowability, flame retardancy, and impact resistance, and its mechanical characteristics and heat resistance are satisfactory.

### INDUSTRIAL APPLICABILITY

According to the present invention, there can be provided a polycarbonate resin composition that is excellent in flowability and flame retardancy, and can provide a molded body having a high impact strength. The resin composition is suitably used in, for example, an automobile part (such as an exterior, an interior, or a meter panel), or the housing of electronic equipment or information equipment because the resin composition can be molded into a thin-walled and large-sized molded body.

## Claims

1. A polycarbonate resin composition, comprising:
a polycarbonate resin (A) containing a polycarbonate-polyorganosiloxane copolymer (A-1) having a polycarbonate block comprising a repeating unit represented by the general formula (I) and a polyorganosiloxane block comprising a repeating unit represented by the general formula (II);
a copolymer (B) having constituent units derived from acrylonitrile and styrene, and being free of a constituent unit derived from methyl methacrylate;
a copolymer (C) having constituent units derived from butadiene and methyl methacrylate; and
a flame retardant (D),
wherein a content of the polyorganosiloxane block moiety in the entire resin composition is from 0.70 mass% to 10 mass%, and a content of the constituent unit derived from butadiene in the entire resin composition is from 3 mass% to 10 mass%: 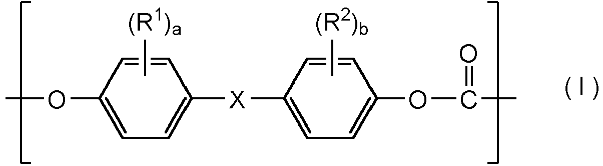 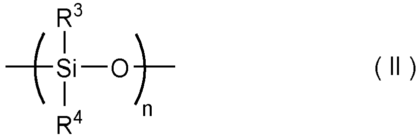 wherein R¹ and R² each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, -SO₂-, -O-, or -CO-, R³ and R⁴ each independently represent a hydrogen atom, a halogen atom, an alkyl group having 1 to 6 carbon atoms, an alkoxy group having 1 to 6 carbon atoms, or an aryl group having 6 to 12 carbon atoms, a and b each independently represent an integer of from 0 to 4, and n represents an average number of repetitions,
wherein the component (B) contains an acrylonitrile-butadiene-styrene terpolymer (B-1).

2. The polycarbonate resin composition according to claim 1, wherein a content of the polyorganosiloxane block moiety in the polycarbonate resin (A) is from 0.75 mass% to 15 mass%.

3. The polycarbonate resin composition according to claim 1, wherein the component (B) further contains an acrylonitrile-styrene bipolymer (B-2).

4. The polycarbonate resin composition according to any one of claims 1 to 3, wherein the component (C) contains one or more selected from a methyl methacrylate-butadiene-styrene terpolymer and a methyl methacrylate-butadiene bipolymer.

5. The polycarbonate resin composition according to claim 3 or 4, wherein a content of the component (B-1) is from 8 parts by mass to 100 parts by mass, a content of the component (B-2) is 25 parts by mass or less, and a content of the component (C) is from 0.5 part by mass to 8 parts by mass with respect to 100 parts by mass of the component (A).

6. The polycarbonate resin composition according to any one of claims 1 to 5, wherein a content of the constituent unit derived from butadiene in the component (B-1) is from 8 mass% to 75 mass%.

7. The polycarbonate resin composition according to any one of claims 3 to 6, wherein a melt volume rate (MVR) of the component (B-2) measured according to ISO 1133, at a temperature of 200°C and a load of 10 kgf is from 3 cm³/10 min to 150 cm³/10 min.

8. The polycarbonate resin composition according to any one of claims 1 to 7, wherein the component (D) comprises a phosphorus-based flame retardant.

9. The polycarbonate resin composition according to claim 8, wherein the phosphorus-based flame retardant comprises a condensed phosphate.

10. The polycarbonate resin composition according to any one of claims 1 to 9, wherein a content of the flame retardant (D) is from 10 parts by mass to 40 parts by mass with respect to 100 parts by mass of the component (A).

11. A molded body, comprising the polycarbonate resin composition of any one of claims 1 to 10.

## Patentansprüche

1. Polycarbonatharzzusammensetzung, umfassend:
ein Polycarbonatharz (A), enthaltend ein Polycarbonat-Polyorganosiloxan-Copolymer (A-1) mit einem Polycarbonatblock, umfassend eine Wiederholungseinheit, dargestellt durch die allgemeine Formel (I), und einen Polyorganosiloxanblock, umfassend eine Wiederholungseinheit, dargestellt durch die allgemeine Formel (II);
ein Copolymer (B), das von Acrylnitril und Styrol abgeleitete Struktureinheiten aufweist und frei von einer von Methylmethacrylat abgeleiteten Struktureinheit ist;
ein Copolymer (C) mit von Butadien und Methylmethacrylat abgeleiteten Struktureinheiten; und
ein flammhemmendes Mittel (D),
wobei ein Gehalt der Polyorganosiloxanblock-Gruppe in der gesamten Harzzusammensetzung 0,70 Massen-% bis 10 Massen-% beträgt und ein Gehalt der von Butadien abgeleiteten Struktureinheit in der gesamten Harzzusammensetzung 3 Massen-% bis 10 Massen-% beträgt: 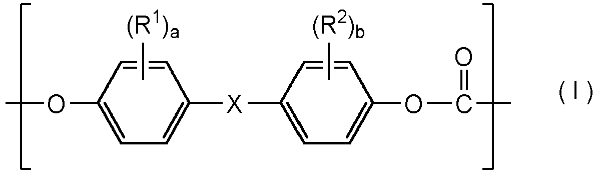 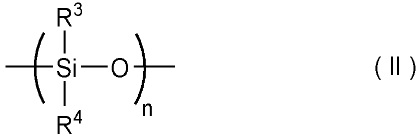
worin R¹ und R² jeweils unabhängig voneinander für ein Halogenatom, eine Alkylgruppe mit 1 bis 6 Kohlenstoffatomen oder eine Alkoxygruppe mit 1 bis 6 Kohlenstoffatomen stehen, X für eine Einfachbindung, eine Alkylengruppe mit 1 bis 8 Kohlenstoffatomen, eine Alkylidengruppe mit 2 bis 8 Kohlenstoffatomen, eine Cycloalkylengruppe mit 5 bis 15 Kohlenstoffatomen, eine Cycloalkylidengruppe mit 5 bis 15 Kohlenstoffatomen, eine Fluorendiylgruppe, eine Arylalkylengruppe mit 7 bis 15 Kohlenstoffatomen, eine Arylalkylidengruppe mit 7 bis 15 Kohlenstoffatomen, -S-, -SO-, -SO₂-, -O- oder -COsteht, R³ und R⁴ jeweils unabhängig voneinander für ein Wasserstoffatom, ein Halogenatom, eine Alkylgruppe mit 1 bis 6 Kohlenstoffatomen, eine Alkoxygruppe mit 1 bis 6 Kohlenstoffatomen oder eine Arylgruppe mit 6 bis 12 Kohlenstoffatomen stehen, a und b jeweils unabhängig voneinander für eine ganze Zahl von 0 bis 4 stehen, und n für eine durchschnittliche Anzahl von Wiederholungen steht,
wobei die Komponente (B) ein Acrylnitril-Butadien-Styrol-Terpolymer (B-1) enthält.

2. Polycarbonatharzzusammensetzung gemäß Anspruch 1, wobei ein Gehalt der Polyorganosiloxanblock-Gruppe in dem Polycarbonatharz (A) 0,75 Massen-% bis 15 Massen-% beträgt.

3. Polycarbonatharzzusammensetzung gemäß Anspruch 1, wobei die Komponente (B) weiterhin ein Acrylnitril-Styrol-Bipolymer (B-2) enthält.

4. Polycarbonatharzzusammensetzung gemäß einem der Ansprüche 1 bis 3, wobei die Komponente (C) eines oder mehrere, ausgewählt aus einem Methylmethacrylat-Butadien-Styrol-Terpolymer und einem Methylmethacrylat-Butadien-Bipolymer, enthält.

5. Polycarbonatharzzusammensetzung gemäß Anspruch 3 oder 4, wobei ein Gehalt der Komponente (B-1) 8 Massenteile bis 100 Massenteile beträgt, ein Gehalt der Komponente (B-2) 25 Massenteile oder weniger beträgt und ein Gehalt der Komponente (C) 0,5 Massenteile bis 8 Massenteile, bezogen auf 100 Massenteile der Komponente (A), beträgt.

6. Polycarbonatharzzusammensetzung gemäß einem der Ansprüche 1 bis 5, wobei ein Gehalt der von Butadien abgeleiteten Struktureinheit in der Komponente (B-1) 8 Massen-% bis 75 Massen-% beträgt.

7. Polycarbonatharzzusammensetzung gemäß einem der Ansprüche 3 bis 6, wobei eine Schmelzvolumenrate (MVR) der Komponente (B-2), gemessen gemäß ISO 1133 bei einer Temperatur von 200°C und einer Last von 10 kgf, von 3 cm³/10 min bis 150 cm³/10 min beträgt.

8. Polycarbonatharzzusammensetzung gemäß einem der Ansprüche 1 bis 7, wobei die Komponente (D) ein phosphorbasiertes flammhemmendes Mittel umfasst.

9. Polycarbonatharzzusammensetzung gemäß Anspruch 8, wobei das phosphorbasierte flammhemmende Mittel ein kondensiertes Phosphat umfasst.

10. Polycarbonatharzzusammensetzung gemäß einem der Ansprüche 1 bis 9, wobei ein Gehalt des flammhemmenden Mittels (D) 10 Masseteile bis 40 Masseteile, bezogen auf 100 Masseteile der Komponente (A), beträgt.

11. Formkörper, umfassend die Polycarbonatharzzusammensetzung gemäß einem der Ansprüche 1 bis 10.

## Revendications

1. Composition de résine de polycarbonate, comprenant :
une résine de polycarbonate (A) contenant un copolymère de polycarbonate-polyorganosiloxane (A-1) présentant un bloc de polycarbonate comprenant un motif de répétition représenté par la formule générale (I) et un bloc de polyorganosiloxane comprenant un motif de répétition représenté par la formule générale (II) ;
un copolymère (B) présentant des unités constitutives dérivées de l'acrylonitrile et du styrène, et exempt d'unité constitutive dérivée du méthacrylate de méthyle ;
un copolymère (C) présentant des unités constitutives dérivées du butadiène et du méthacrylate de méthyle ; et
un retardateur de flamme (D),
dans laquelle une teneur de la fraction de bloc de polyorganosiloxane dans la totalité de la composition de résine est comprise entre 0,70 % en masse et 10 % en masse, et une teneur de l'unité constitutive dérivée du butadiène dans la totalité de la composition de résine est comprise entre 3 % en masse et 10 % en masse : 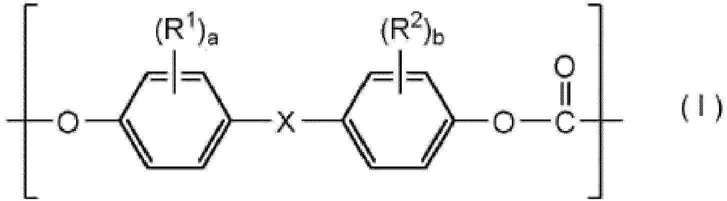 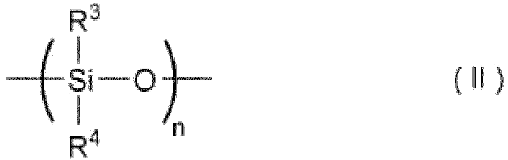 dans laquelle R¹ et R² représentent chacun indépendamment un atome d'halogène, un groupe alkyle présentant 1 à 6 atomes de carbone, ou un groupe alcoxy présentant 1 à 6 atomes de carbone, X représente une liaison simple, un groupe alkylène présentant 1 à 8 atomes de carbone, un groupe alkylidène présentant 2 à 8 atomes de carbone, un groupe cycloalkylène présentant 5 à 15 atomes de carbone, un groupe cycloalkylidène présentant 5 à 15 atomes de carbone, un groupe fluorenediyle, un groupe arylalkylène présentant 7 à 15 atomes de carbone, un groupe arylalkylidène présentant 7 à 15 atomes de carbone, -S-, -SO-, -SO₂-, -O-, ou -CO-, R³ et R⁴ représentent chacun indépendamment un atome d'hydrogène, un atome d'halogène, un groupe alkyle présentant 1 à 6 atomes de carbone, un groupe alcoxy présentant 1 à 6 atomes de carbone, ou un groupe aryle présentant 6 à 12 atomes de carbone, a et b représentent chacun indépendamment un nombre entier de 0 à 4, et n représente un nombre moyen de répétitions,
dans laquelle le composant (B) contient un terpolymère acrylonitrile-butadiène-styrène (B-1).

2. Composition de résine de polycarbonate selon la revendication 1, dans laquelle une teneur de la fraction de bloc de polyorganosiloxane dans la résine de polycarbonate (A) est comprise entre 0,75 % en masse et 15 % en masse.

3. Composition de résine de polycarbonate selon la revendication 1, dans laquelle le composant (B) contient en outre un bipolymère acrylonitrile-styrène (B-2).

4. Composition de résine de polycarbonate selon l'une quelconque des revendications 1 à 3, dans laquelle le composant (C) contient un ou plusieurs éléments sélectionnés parmi un terpolymère méthacrylate-butadiène-styrène de méthyle et un bipolymère méthacrylate-butadiène de méthyle.

5. Composition de résine de polycarbonate selon la revendication 3 ou la revendication 4, dans laquelle une teneur du composant (B-1) est comprise entre 8 parties en masse et 100 parties en masse, une teneur du composant (B-2) est de 25 parties en masse ou moins, et une teneur du composant (C) est comprise entre 0,5 partie en masse et 8 parties en masse par rapport à 100 parties en masse du composant (A).

6. Composition de résine de polycarbonate selon l'une quelconque des revendications 1 à 5, dans laquelle une teneur de l'unité constitutive dérivée du butadiène dans le composant (B-1) est comprise entre 8 % en masse et 75 % en masse.

7. Composition de résine de polycarbonate selon l'une quelconque des revendications 3 à 6, dans laquelle un indice de fluidité volumique (MVR) du composant (B-2), mesuré conformément à la norme ISO 1133, à une température de 200°C et une charge de 10 kgf, est compris entre 3 cm³/10 min et 150 cm³/10 min.

8. Composition de résine de polycarbonate selon l'une quelconque des revendications 1 à 7, dans laquelle le composant (D) comprend un retardateur de flamme à base de phosphore.

9. Composition de résine de polycarbonate selon la revendication 8, dans laquelle le retardateur de flamme à base de phosphore comprend un phosphate condensé.

10. Composition de résine de polycarbonate selon l'une quelconque des revendications 1 à 9, dans laquelle une teneur du retardateur de flamme (D) est comprise entre 10 parties en masse et 40 parties en masse par rapport à 100 parties en masse du composant (A).

11. Corps moulé comprenant la composition de résine de polycarbonate selon l'une quelconque des revendications 1 à 10.
